# FASCICULE DE BREVET EUROPEEN

(11) **EP 2 795 006 B1**
(45) Date de publication et mention de la délivrance du brevet: **22.04.2020**
(21) Numéro de dépôt: 12824693.1
(22) Date de dépôt: 24.12.2012
(51) Int. Cl.: E03F 5/10, G05D 7/01, F16K 15/03, F16K 17/04

(54) **DISPOSITIF LIMITEUR DE DEBIT**
FLUSSBEGRENZUNGSVORRICHTUNG
FLOW-LIMITING DEVICE

(30) Priorité: 23.12.2011 FR 1104056
(43) Date de publication de la demande: 29.10.2014
(73) Titulaire: Curinier, Emmanuel, 06410 Biot (FR)
(72) Inventeur: Curinier, Emmanuel, 06410 Biot (FR)
(74) Mandataire: Cornuejols, Georges
(86) Numéro de dépôt international: PCT/FR2012/053078
(87) Numéro de publication internationale: WO 2013/093387

(56) Documents cités:
- DE-A1- 4 322 260
- DE-A1-102009 025 576
- FR-A1- 2 432 663
- GB-A- 2 449 352
- GB-A- 190 100 921
- KR-A- 20090 034 154
- US-A- 929 514
- US-A- 3 292 658
- US-A1- 2005 092 372

## Description

### DOMAINE TECHNIQUE DE L'INVENTION

La présente invention concerne un dispositif limiteur de débit. Elle s'applique, en particulier, à la régulation de débit des évacuations d'eaux pluviales.

### ETAT DE LA TECHNIQUE

L'imperméabilisation croissante des zones urbaines couplée à des événements pluvieux de plus en plus intenses avec l'évolution climatique conduit à des ruissellements urbains de plus en plus difficiles à gérer. Des inondations graves en sont la conséquence. Pour lutter contre ces ruissellements urbains, les donneurs d'ordres imposent de plus en plus de contraintes aux aménageurs afin que les imperméabilisations nouvelles soient compensées.

Ces compensations peuvent consister à :
- infiltrer à la source les eaux de pluies sur les parcelles imperméabilisées ;
- réguler les ruissellements issus des parcelles imperméabilisées grâce à des bassins de rétention ;
- écrêter les pointes de débit transitant dans les réseaux grâce à des bassins de rétention à l'aval des zones imperméabilisées.

Aujourd'hui, la rétention de ces eaux de ruissellement peut se faire grâce à des noues, fossés, chaussées réservoirs, bassins enterrés, conduites stockantes,... comprenant un exutoire à débit limité : l'ajutage, et une surverse qui permet d'évacuer le surplus de débit lorsque la pluie est si forte que le débit et le volume d'eau résultant du ruissellement dépasse la capacité de rétention de l'ouvrage.

Le point commun à toutes ces techniques est que le stockage des eaux ne peut se faire que dans des zones relativement plates et que leur exutoire, constitué d'un orifice dont le diamètre ou la capacité d'évacuation est volontairement restreint a tendance à se colmater s'il n'est pas régulièrement entretenu.

La rétention des eaux de pluies nécessite donc souvent beaucoup d'espace, des zones plates, et un entretien très régulier.

Le document KR 2009 0034154 concerne un clapet anti-retour positionné à l'exutoire d'un réseau d'assainissement vers un ruisseau ou une rivière, clapet dont la partie mobile peut s'ouvrir sous la pression de l'eau et dont l'ouverture est facilité grâce à un flotteur placé en partie basse. Cependant, ce dispositif ne permet pas de réguler le débit qui le traverse puisqu'il ne retient pas cette eau, le flotteur visant, au contraire, à faciliter l'ouverture du clapet.

Le document US 2005/092372 A1 présente un clapet dont la fonction est d'assurer la ventilation de réservoirs d'eau en évitant la prolifération de moustiques et autres insectes. Ce clapet muni d'une moustiquaire est conçu pour laisser passer l'eau dans un sens, sans laisser passer d'insecte dans l'autre sens

Le document FR 2 432 663 présente un clapet à battant muni d'un ressort pour éviter que ce clapet ne claque lorsqu'il se ferme.

Les documents DE 10 2009 025576, US 3 292 658 et DE 43 22 260 présentent des dispositifs ayant tout ou partie des inconvénients de l'art antérieur exposés ci-dessus.

Le document US 929 514 décrit un protecteur de prise d'égout et de drain.

### OBJET DE L'INVENTION

La présente invention vise à remédier à tout ou partie de ces inconvénients.

A cet effet, la présente invention vise, selon un premier aspect, une conduite d'eau pluviale selon la revendication 1.

Grâce à ces dispositions, lorsque le débit d'eau arrivant vers le clapet est inférieur au débit d'eau pouvant traverser l'ajutage, l'eau traverse le clapet sans être retenue. Lorsque le débit augmente, en dessous d'une certaine pression, le clapet ne s'ouvre pas et seul le débit autorisé par l'ajutage s'écoule à travers le clapet. Au-delà d'une valeur prédéterminée de pression, le clapet s'ouvre et laisse passer l'ensemble de l'eau. Une régulation de débit est ainsi réalisée. En cas d'inondation ou de forte chute de pluie, chaque clapet objet de la présente invention permet de retenir de l'eau et évite ainsi, en aval, un engorgement des tuyauterie et un débordement de l'eau par des regards de visite. Le dispositif limiteur de débit objet de la présente invention joue ainsi un rôle sécuritaire de surverse.

Ainsi, l'eau ne reste pas stagnante en amont du clapet pour de petits débits d'eau. Cette forme assure le bon nettoyage du système lors de l'ouverture du clapet, les détritus éventuellement bloqués dans l'ajutage étant emportés par le flux du liquide, dès que le clapet s'ouvre.

Dans des modes de réalisation, l'ajutage est positionné en périphérie du clapet mobile.

Ainsi, à la différence d'un simple orifice, l'ajutage évite que des détritus soient définitivement retenus dans son ouverture.

Dans des modes de réalisation, le système de fermeture forcée comporte au moins un ressort fixé, pour une extrémité, sur la partie fixe et, pour l'autre extrémité, sur le clapet mobile.

Ainsi, la résistance à l'ouverture est fixée, par la raideur de chaque ressort, en fonction de la hauteur d'eau à retenir en amont du dispositif limiteur de débit.

Dans des modes de réalisation, le système de fermeture forcée comporte un moyen de réglage par précontrainte d'au moins une fixation d'une extrémité d'un ressort.

Dans des modes de réalisation, au moins un ressort est un ressort hélicoïdal fixé au clapet mobile par l'intermédiaire d'une tige filetée fixée à ses extrémités, traversant la partie supérieure du clapet mobile, et bloquée par un écrou qui vient en butée sur le clapet mobile.

Dans des modes de réalisation, la valeur prédéterminée correspond à une hauteur d'eau supérieure à un mètre au dessus de la partie la plus basse du clapet mobile.

Dans des modes de réalisation, le système de fermeture forcée comporte au moins un élastomère fixé, pour une extrémité, sur la partie fixe et, pour l'autre extrémité, sur le clapet mobile.

On note que la raideur de chaque élastomère, qui fixe la résistance à l'ouverture, est choisie en fonction de la hauteur d'eau à retenir en amont du dispositif limiteur de débit objet de la présente invention.

Dans des modes de réalisation, le système de fermeture forcée comporte au moins un contrepoids fixé sur le clapet mobile.

On note que la masse de chaque contrepoids est choisie en fonction de la hauteur d'eau à retenir en amont.

Selon un deuxième aspect, la présente invention vise une conduite d'eau pluviale, qui comporte au moins un dispositif limiteur de débit objet de la présente invention.

Dans des modes de réalisation, pour chaque dispositif limiteur de débit, la valeur prédéterminée de la pression de fluide en amont correspond à une hauteur d'eau inférieure à la différence d'altitude entre le l'ajutage dudit dispositif et l'ouverture vers l'extérieure de plus faible altitude reliée par une pente continue audit dispositif.

Dans des modes de réalisation, la conduite objet de la présente invention comporte une conduite stockante dont la section présente une surface supérieure à un demi mètre carré.

Dans des modes de réalisation, la surface de la section de la conduite stockante est au moins égale au quadruple de la surface du clapet mobile.

Selon un troisième aspect, la présente invention vise une conduite d'eau pluviale, qui comporte au moins une conduite objet de la présente invention.

Les avantages, buts et caractéristiques particulières de la conduite objet de la présente invention et du réseau d'eau pluviale objet de la présente invention étant similaires à ceux du dispositif limiteur de débit objet de la présente invention, ils ne sont pas rappelés ici.

### BREVE DESCRIPTION DES FIGURES

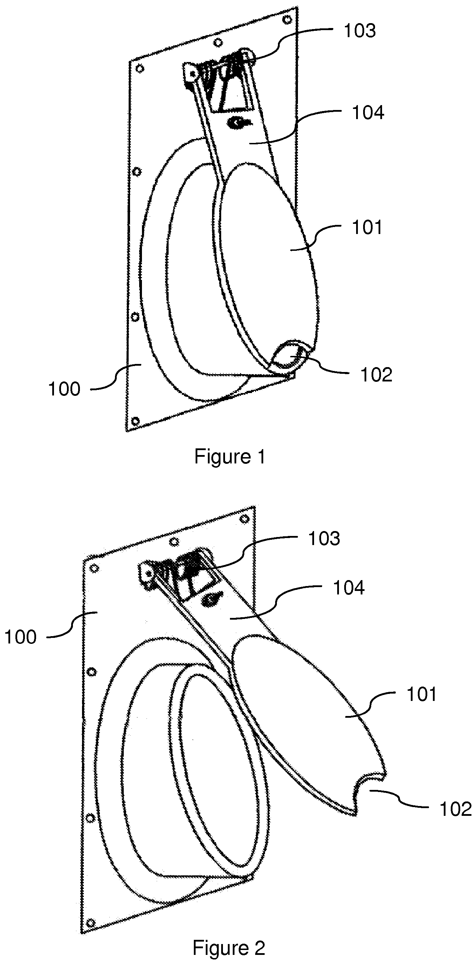

D'autres avantages, buts et caractéristiques de la présente invention ressortiront de la description qui va suivre, faîte, dans un but explicatif et nullement limitatif, en regard des dessins annexés dans lesquels :
- le figure 1 représente, schématiquement et en vue de trois quarts, un mode de réalisation particulier d'un dispositif limiteur de débit objet de la présente invention, en position fermée,
- le figure 2 représente, schématiquement et en vue de trois quarts, le mode de réalisation particulier d'un dispositif limiteur de débit objet de la présente invention illustré en figure 1, en position ouverte,
- la figure 3 représente, schématiquement, une implantation d'un dispositif limiteur de débit objet de la présente invention, sous une chaussée et
- la figure 4 illustre, en quatre étapes, le fonctionnement du dispositif limiteur de débit objet de la présente invention lorsque le débit d'eau arrivant en amont augmente progressivement.

### DESCRIPTION D'EXEMPLES DE REALISATION DE L'INVENTION

Le dispositif limiteur de débit objet de la présente invention a pour objectif la mise en charge d'un réseau de fluide, notamment d'eau pluviale, situé en amont lorsque des débits d'eau supérieurs à une valeur limite prédéterminée par construction y sont observés. Le dispositif limiteur de débit objet de la présente invention est conçu de manière que son ouverture ne se fasse que rarement lorsque la pression d'eau en amont devient supérieure à une autre valeur limite prédéterminée par construction. Le dispositif limiteur de débit objet de la présente invention joue alors un rôle sécuritaire de surverse.

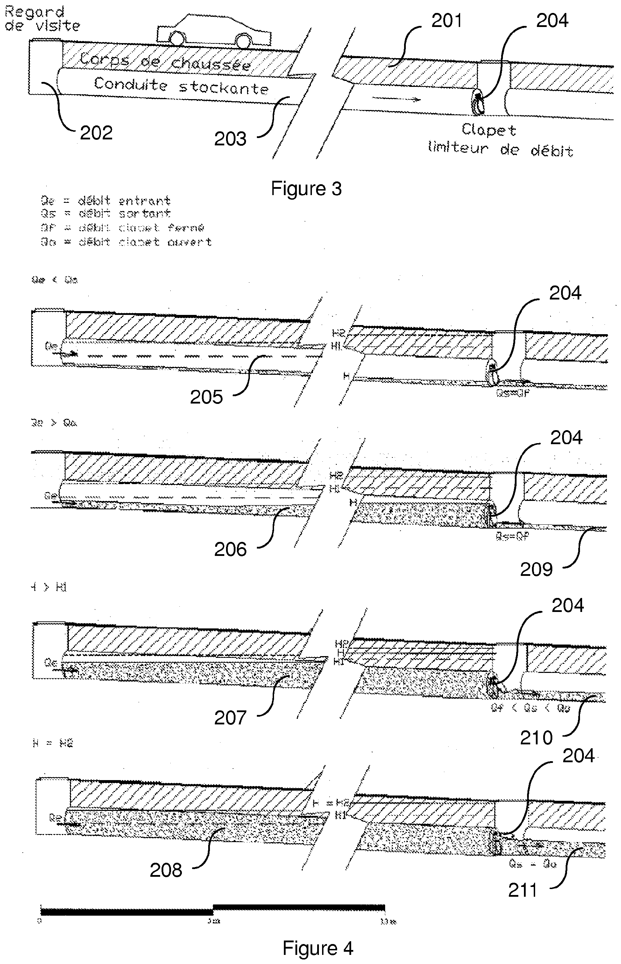

En référence à la figure 1, le dispositif limiteur de débit objet de la présente invention comporte une partie fixe 100 comportant un corps tubulaire dont l'extrémité est légèrement inclinée. Un clapet mobile 101 à la base duquel est ménagé un ajutage 102 est maintenu fortement fermé sur cette extrémité grâce à un système de fermeture forcée 103 dont la puissance de fermeture est choisie pour contenir une pression d'eau prédéterminée permettant la mise en charge d'un moyen de stockage d'eau (non représenté en figure 1, 203 en figure 3) situé à l'amont du dispositif.

Le système de fermeture forcée 103 du clapet mobile 102 peut être réalisé, à titre d'exemple non limitatif, grâce à deux ressorts hélicoïdaux fixés, pour une extrémité, sur la partie fixe 100 du dispositif et, pour l'autre extrémité, sur le clapet mobile 101, et dont la raideur, qui détermine la résistance à l'ouverture du dispositif, est fixée en fonction de la hauteur d'eau à retenir en amont.

Afin d'adapter la pression d'eau à partir de laquelle le système de fermeture forcée commence laisser le clapet mobile 101 se déplacer et le dispositif s'ouvrir, au moins un ressort hélicoïdal est équipé d'un moyen de précontrainte. Par exemple, ce moyen de précontrainte fait tourner une extrémité du ressort autour de l'axe du ressort pour que l'effort exercé par ce ressort en position fermée du dispositif corresponde à la valeur limite de pression d'eau provoquant l'ouverture du dispositif.

A titre d'exemple non limitatif et en référence au système de fermeture forcée constitué de deux ressorts hélicoïdaux 103 représenté sur la figure 1, un tel dispositif de précontrainte peut être réalisé grâce à une tige filetée fixée aux extrémités des ressorts hélicoïdaux, traversant la partie supérieure du clapet mobile, et bloquée grâce à un écrou qui vient en butée sur le clapet mobile 104.

Dans des variantes non représentées, le système de fermeture forcée 103 comporte au moins un ressort, mécanique ou pneumatique, vertical, horizontal ou oblique. Par exemple, le moyen de précontrainte permet de régler la longueur de ce ressort pour la position fermée du clapet mobile 101.

Dans des variantes non représentées, le système de fermeture forcée 103 comporte au moins un élastomère fixé, pour une extrémité, sur la partie fixe 100 et, pour l'autre extrémité, sur le clapet mobile 101. Dans ce cas, le moyen de précontrainte commande la longueur ou la raideur d'au moins un élastomère pour la position fermée du clapet mobile 101, par exemple.

Dans des variantes non représentées, le système de fermeture forcée 103 comporte au moins un contrepoids fixé sur le clapet mobile 101. Dans ce cas, le moyen de précontrainte déplace le contrepoids verticalement sur le clapet mobile 101, par exemple. Le moment du poids de ce contrepoids, par rapport à l'axe de rotation du clapet mobile 101 varie ainsi progressivement.

Placé à l'aval d'un dispositif de rétention d'eau, le dispositif limiteur de débit limite ainsi le débit de sortie grâce à l'ajutage 102. Comme illustré en figure 2, le clapet mobile 101 s'ouvre progressivement lorsque la pression en amont dépasse une valeur limite prédéterminée, grâce à son système de fermeture forcée 103.

Comme représenté en figure 3, à titre d'exemple non limitatif, le dispositif limiteur de débit 204 objet de la présente invention peut être associé à une conduite stockante 203 surdimensionnée. Dans ces conditions, la conduite 203 étant étanche et pouvant résister à la pression, elle stocke de l'eau jusqu'à ce que la hauteur d'eau dans la conduite 203 atteigne la pression prédéterminé qui déclenche l'ouverture du clapet mobile 101. Si le débit entrant reste fort, le clapet mobile 101 reste ouvert, et le débit sortant peut augmenter, jusqu'à ce que le clapet mobile 101 soit complètement ouvert, lorsque la hauteur d'eau stockée atteint un niveau maximum. Ce niveau maximum est fixé à une côte inférieure à celle du niveau d'un regard de visite 202, d'une grille ou d'un avaloir d'altitude la plus faible raccordé à la conduite stockante 203, afin d'éviter tout débordement sur une chaussée 201.

Préférentiellement, pour chaque dispositif limiteur de débit 204, la valeur prédéterminée de la pression de fluide en amont correspond à une hauteur d'eau inférieure à la différence d'altitude entre le l'ajutage 102 dudit dispositif 204 et l'ouverture vers l'extérieure de plus faible altitude reliée par une pente continue audit dispositif 204.

Le dispositif limiteur de débit 204 objet de la présente invention, associé à une conduite surdimensionnée 203, permet donc de faire de la rétention sous chaussée 201, sans emprises complémentaires, y compris sous une chaussée en pente. Il en découle un gain d'espace très appréciable dans les zones urbaines qui sont souvent les plus touchées par les problèmes du ruissellement.

Lorsque le clapet mobile 101 s'ouvre, les inévitables dépôts bloqués devant l'ajutage 102 sont évacués avec le flux hydraulique, ce qui empêche tout colmatage et limite l'entretien à un simple contrôle de fonctionnement. A cet effet, préférentiellement, l'ajutage 102 du clapet mobile 101 est ménagé à sa base et présente une forme non jointive, ce qui évite, par rapport à un orifice formé dans le clapet mobile 101 et entouré par lui, que des détritus restent coincés même quand le clapet mobile 101 s'ouvre.

La figure 3 présente un exemple non limitatif d'utilisation du dispositif limiteur de débit avec une conduite stockante 203 de diamètre de 800 mm, posée à 4% de pente et à 80 cm sous le terrain naturel, ce qui correspond aux instructions techniques habituelles. Ainsi, préférentiellement, la surface de la section de la conduite stockante 203 est supérieure à un demi mètre carré.

Dans cette configuration, en intercalant un dispositif limiteur de débit 204 objet de la présente invention tout les 20 mètres dans un regard de visite on obtient un stockage d'environ un demi mètre cube d'eau par mètre linéaire de conduite. Cela permet de compenser une voirie d'environ cinq mètres de large sans autre organe de rétention et sans débordement sur la chaussée 201. Le nombre de dispositifs limiteurs de débit 204 objets de la présente invention nécessaires par rapport au linéaire de conduites stockantes est calculé de manière à optimiser le volume de stockage. Ce nombre varie en fonction de la pente et de la profondeur de pose. Moins la voirie est en pente et plus la conduite est profonde, moins il faut de dispositif limiteur de débit 204 objet de la présente invention. Dans cette configuration, un tel dispositif limiteur de débit 204 objet de la présente invention peut être pourvu d'un système de fermeture forcée capable de résister à une pression d'eau supérieure à un mètre, par exemple de 1,3 mètre.

La figure 4 illustre, en quatre étapes, le fonctionnement d'un dispositif limiteur de débit 204 objet de la présente invention mis en oeuvre selon l'implantation illustrée en figure 3.

Le niveau d'eau à l'amont, dans la conduite stockante 203, qui déclenche l'ouverture du clapet est noté « H1 ». Le moyen de fermeture forcée 103 est réglé pour qu'il soit complètement ouvert lorsque la hauteur d'eau à l'amont atteint un niveau « H2 », correspondant à la ligne discontinue notée « Qe » 205. Ce niveau de consigne H2, qui correspond à une ouverture complète du clapet mobile 101, est fixé de manière à ce que l'eau ne puisse déborder sur la chaussée 201. Ce niveau H2 est donc en dessous du niveau de la grille ou de l'avaloir le plus bas raccordé sur la conduite stockante 203 concernée.

Selon l'exemple non limitatif développé ci-dessus (conduite stockante de diamètre 800 mm, posée à 4% de pente et à 80 cm sous le terrain naturel), la valeur H2 pourrait être fixée à environ 1,5 mètre ce qui signifie que le clapet mobile 101 serait complètement ouvert lorsque la hauteur d'eau stockée à l'amont atteindrait 1,5 mètre, par rapport au fil d'eau au niveau de l'ajutage 102.

Lorsque le clapet mobile 101 est fermé, l'écoulement de l'eau est limité par l'ouverture ménagée dans le clapet mobile 101, qui constitue ainsi un ajutage 102, comme illustré en haut de la figure 4. La capacité d'évacuation de cet ajutage 102 est à déterminée en fonction du type de rétention recherchée, du volume de stockage disponible et de la superficie de la zone imperméabilisée située à l'amont. Les eaux de ruissellement collectées transitent dans la conduite stockante 203. Lorsque le débit entrant résultant du ruissellement est supérieur à la capacité d'évacuation de l'ajutage du clapet mobile 101, le niveau d'eau 206 monte dans la conduite stockante 203. La conduite stockante 203 commence ainsi à se remplir comme illustré dans le deuxième schéma de la figure 4, en partant du haut. Le pic de débit est alors écrêté à la valeur donnée par l'ajutage 102, le clapet mobile 101 étant fermé, débit noté « Qf ».

Tant que la pluie continue, le débit sortant, noté « Qs », délivré à l'aval du dispositif limiteur de débit 204 reste celui donné par l'ajutage 102 et le niveau d'eau, noté « H » 207 monte dans la conduite stockante 203. Lorsque le niveau 207 atteint le niveau de déclenchement H1, par exemple 30 cm sous le niveau de la grille ou avaloir le plus bas raccordé à la conduite stockante 203, le clapet mobile 101 commence à s'ouvrir, augmentant progressivement le débit sortant relâché à l'aval (fonction surverse). Cette étape est illustrée dans le troisième schéma en partant du haut, en figure 4.

Si le niveau d'eau amont H 208 continue à augmenter et atteint la hauteur H2, le clapet mobile 101 finit par être complètement ouvert, délivrant le débit clapet ouvert note « Qo », équivalent à une conduite de diamètre 400 mm, sans perte de charge, ce qui correspond au dimensionnement d'un réseau classique pour la voirie concernée. Cette étape est illustrée dans le dernier schéma en partant du haut, en figure 4.

Ainsi, préférentiellement, le diamètre de la conduite stockante 203 est au moins égale au double du diamètre du clapet mobile 101. En d'autres termes, préférentiellement, la surface de la section de la conduite stockante 203 est au moins égale au quadruple de la surface du clapet mobile 101.

Le dispositif limiteur de débit 204 peut également être associé à un petit bassin de rétention individuel (non représenté). Dans ce cas, le dispositif limiteur de débit 204 permet la mise en place d'un ajutage de faible diamètre, sans risque de colmatage.

Les avantages du dispositif limiteur de débit 204 comportent les suivants :
- stockage en pente possible grâce à l'utilisation de conduites stockantes posées sous chaussée selon le même profil que la voierie ;
- autocurage assuré à chaque forte pluie, donc pas de curage préventif nécessaire ;
- pas de colmatage de l'ajutage ;
- surverse à ouverture progressive, évitant les pics de débit difficiles à gérer ;
- installation simple, rapide et adaptable ;
- aucun filtre nécessaire à l'amont ;
- utilisation possible sur d'anciennes conduites pour leur redonner un fonctionnement proche d'un écoulement naturel (progressivité de la réaction du réseau) ;
- en cas de forte pluie, ouverture totale du clapet pour un écoulement équivalent à celui d'un réseau classique sans pertes de charges et
- possibilité, lorsqu'il est associé à des systèmes de rétention peu volumineux, de mettre en place un ajutage de faible diamètre sans colmatage.

Le dispositif limiteur de débit 204 réunit, en un seul organe, les fonctions d'ajutage (orifice limiteur de débit) et de surverse. Il permet de faire de la rétention d'eau avec peu d'espace (stockage sous chaussée), sous des chaussées en pente et sans colmatage de l'ajutage.

Le dispositif limiteur de débit 204 peut être utilisé sur tous les réseaux d'eaux pluviales situés dans les centres urbains où l'espace fait défaut et ou les ruissellements importants par temps de pluie peuvent provoquer des inondations. Plus généralement, le dispositif limiteur de débit objet de la présente invention se justifie pleinement partout où un règlement d'assainissement impose des dispositifs de compensation des superficies imperméabilisées (voierie, parking, lotissements, grandes surfaces, programmes immobiliers, aéroports...).

Associé à un système de stockage, il permet de faire de la rétention sous chaussée sans emprises complémentaires, y compris sous une chaussée en pente, d'où un gain d'espace appréciable en zone urbaine.

Dans des variantes non représentées, l'ajutage 102 est un orifice ouvert dans le clapet mobile 101. Comme exposé ci-dessus, ces variantes ne sont pas préférentielles pour des raisons de risque d'occlusion par des détritus.

Dans des variantes non préférentielles non représentées, l'ajutage est formé sur une autre partie que la partie la plus basse du clapet mobile 101. De cette manière une rétention d'eau constante est réalisée.

## Revendications

1. Conduite d'eau pluviale (203), qui comporte au moins un dispositif limiteur de débit comportant une partie fixe (100) et un clapet mobile (101), dans lequel le clapet mobile :
- comporte un ajutage (102) et
- est maintenu fermé grâce à un système de fermeture forcée (103) qui permet au clapet mobile de limiter le débit d'un fluide le traversant et qui s'ouvre pour laisser passer un débit plus important lorsque la pression de ce fluide à l'amont devient supérieure à une valeur prédéterminée ;
conduite **caractérisée en ce que**, pour chaque dispositif limiteur de débit, la valeur prédéterminée de la pression de fluide en amont correspond à une hauteur d'eau inférieure à la différence d'altitude entre le l'ajutage (102) dudit dispositif et l'ouverture vers l'extérieur de plus faible altitude reliée par une pente continue audit dispositif.

2. Conduite d'eau pluviale (203) selon la revendication 1, dans laquelle l'ajutage (102) est positionné en partie basse du clapet mobile (101).

3. Conduite d'eau pluviale (203) selon l'une des revendications 1 ou 2, dans laquelle l'ajutage (102) est positionné en périphérie du clapet mobile (101).

4. Conduite d'eau pluviale (203) selon l'une des revendications 1 à 3, dans laquelle le système de fermeture forcée (103) comporte au moins un ressort fixé, pour une extrémité, sur la partie fixe (100) et, pour l'autre extrémité, sur le clapet mobile (101).

5. Conduite d'eau pluviale (203) selon la revendication 4, dans laquelle le système de fermeture forcée (103) comporte un moyen de réglage par précontrainte d'au moins une fixation d'une extrémité d'un ressort.

6. Conduite d'eau pluviale (203) selon l'une des revendications 4 ou 5, dans laquelle au moins un ressort est un ressort hélicoïdal fixé au clapet mobile (101) par l'intermédiaire d'une tige filetée fixée à ses extrémités, traversant la partie supérieure du clapet mobile, et bloquée par un écrou qui vient en butée sur le clapet mobile.

7. Conduite d'eau pluviale (203) selon l'une des revendications 1 à 6, dans laquelle la valeur prédéterminée correspond à une hauteur d'eau supérieure à un mètre au dessus de la partie la plus basse du clapet mobile (101).

8. Conduite d'eau pluviale (203) selon l'une des revendications 1 à 7, dans laquelle le système de fermeture forcée (103) comporte au moins un élastomère fixé, pour une extrémité, sur la partie fixe (100) et, pour l'autre extrémité, sur le clapet mobile (101).

9. Conduite d'eau pluviale (203) selon l'une des revendications 1 à 8, dans laquelle le système de fermeture forcée comporte au moins un contrepoids fixé sur le clapet mobile (101).

10. Conduite d'eau pluviale (203) selon l'une des revendications 1 à 3 ou 7, dans laquelle le système de fermeture forcée (3) comporte un ressort pneumatique fixé, pour une extrémité, sur la partie fixe et pour l'autre sur le clapet mobile et dont la résistance à l'ouverture est fixée en fonction de la hauteur d'eau à retenir en amont.

11. Conduite d'eau pluviale (203) selon l'une des revendications 1 à 10, qui comporte une conduite stockante (203) dont la section présente une surface supérieure à un demi mètre carré.

12. Conduite d'eau pluviale selon l'un des revendications 1 à 11, qui comporte une conduite stockante (203), la surface de la section de la conduite stockante étant au moins égale au quadruple de la surface du clapet mobile (101).

13. Réseau d'eau pluviale, qui comporte au moins une conduite d'eau pluviale (203) selon l'une des revendications 1 à 12.

## Patentansprüche

1. Regenwasserleitung (203), die wenigstens eine Vorrichtung zur Durchsatzbegrenzung umfasst, umfassend einen festen Teil (100) und eine mobile Klappe (101), bei der die mobile Klappe:
- eine Düse (102) umfasst und
- und dank eines Zwangsverschlusssystems (103), das der mobilen Klappe das Begrenzen des Durchsatzes einer sie durchquerenden Flüssigkeit erlaubt und die sich öffnet, um einen höheren Durchsatz durchtreten zu lassen, wenn der Druck dieser Flüssigkeit stromaufwärts einen vorbestimmten Wert übersteigt, geschlossen gehalten ist;
Leitung, die **dadurch gekennzeichnet ist, dass** der vorbestimmte Wert des Drucks der Flüssigkeit stromaufwärts für jede Vorrichtung zur Durchsatzbegrenzung einer Wasserhöhe entspricht, die geringer ist als der Höhenunterschied zwischen der Düse (102) der genannten Vorrichtung und der Öffnung nach außen mit einer geringeren Höhe, die durch ein kontinuierliches Gefälle mit der genannten Vorrichtung verbunden ist.

2. Regenwasserleitung (203) gemäß Anspruch 1, bei der die Düse (102) im unteren Teil der mobilen Klappe (101) angeordnet ist.

3. Regenwasserleitung (203) gemäß einem der Ansprüche 1 oder 2, bei der die Düse (102) am Rand der mobilen Klappe (101) angeordnet ist.

4. Regenwasserleitung (203) gemäß einem der Ansprüche 1 bis 3, bei der das Zwangsverschlusssystem (103) wenigstens eine Feder umfasst, die an einem Ende an dem festen Teil (100) und an dem anderen Ende an der mobilen Klappe (101) befestigt ist.

5. Regenwasserleitung (203) gemäß Anspruch 4, bei der das Zwangsverschlusssystem (103) ein Einstellmittel per Vorspannung wenigstens einer Befestigung eines Endes einer Feder umfasst.

6. Regenwasserleitung (203) gemäß einem der Ansprüche 4 oder 5, bei der wenigstens eine Feder eine Schraubenfeder ist, die an der mobilen Klappe (101) mittels eines Gewindestiftes befestigt ist, der den oberen Teil der mobilen Klappe durchquert, an seinen Enden befestigt und durch eine Mutter blockiert ist, die auf der mobilen Klappe zum Anschlag kommt.

7. Regenwasserleitung (203) gemäß einem der Ansprüche 1 bis 6, bei der der vorbestimmte Wert einer Wasserhöhe entspricht, die höher als einen Meter oberhalb des untersten Teils der mobilen Klappe (101) ist.

8. Regenwasserleitung (203) gemäß einem der Ansprüche 1 bis 7, bei der das Zwangsverschlusssystem (103) wenigstens ein Elastomer umfasst, das an einem Ende an dem festen Teil (100) und an dem anderen Ende an der mobilen Klappe (101) befestigt ist.

9. Regenwasserleitung (203) gemäß einem der Ansprüche 1 bis 8, bei der das Zwangsverschlusssystem wenigstens ein Gegengewicht umfasst, das an der mobilen Klappe (101) befestigt ist.

10. Regenwasserleitung (203) gemäß Anspruch 1, bei der das Zwangsverschlusssystem (3) eine pneumatische Feder umfasst, die an einem Ende an dem festen Teil und am anderen Ende an der mobilen Klappe befestigt ist und deren Öffnungswiderstand in Abhängigkeit von der Wasserhöhe befestigt ist, die stromaufwärts zurückzuhalten ist.

11. Regenwasserleitung (203) gemäß einem der Ansprüche 1 bis 10, die eine Speicherleitung (203) umfasst, deren Querschnitt eine Oberfläche aufweist, die größer als einen halben Quadratmeter ist.

12. Regenwasserleitung gemäß einem der Ansprüche 1 bis 11, die eine Speicherleitung (203) umfasst, wobei die Oberfläche des Querschnitts der Speicherleitung wenigstens gleich dem Vierfachen der Oberfläche der mobilen Klappe (11) ist.

13. Regenwassernetz, das wenigstens eine Regenwasserleitung (203) gemäß einem der Ansprüche 1 bis 12 umfasst.

## Claims

1. Rainwater pipe (203) comprising at least one flow limiting device with a fixed portion (100) and a movable flap (101), wherein the movable flap:
- comprises an orifice (102) and
- is kept closed by a forced closure system (103) that enables the movable flap to limit the flow of a fluid going through it, and to open to let a higher flow rate through when this fluid's upstream pressure exceeds a predefined value;
said pipe being **characterized in that**, for each flow limiting device, the predefined value of the upstream fluid pressure corresponds to a height of water that is lower than the difference in altitude between the orifice (102) of said device and the opening to the exterior of the lowest altitude linked by a continuous incline to said device.

2. Rainwater pipe (203) according to claim 1, wherein the orifice (102) is positioned in the bottom portion of the movable flap (101).

3. Rainwater pipe (203) according to one of claims 1 or 2, wherein the orifice (102) is positioned at the periphery of the movable flap (101).

4. Rainwater pipe (203) according to one of claims 1 to 3, wherein the forced closure system (103) comprises at least one spring attached to the stationary portion (100) at one end and to the movable flap (101) at the other end.

5. Rainwater pipe (203) according to claim 4, wherein the forced closure system (103) comprises a means of adjustment by prestressing at least one fastening of one end of a spring.

6. Rainwater pipe (203) according to one of claims 4 or 5, wherein at least one spring is a helical spring fixed to the movable flap (101) by means of a threaded rod fixed at its ends, passing through the upper portion of the movable flap, and blocked by a nut that comes to rest on the movable flap.

7. Rainwater pipe (203) according to one of claims 1 to 6, wherein the predefined value corresponds to a height of water that is over one meter above the lowest portion of the movable flap (101).

8. Rainwater pipe (203) according to one of claims 1 to 7, wherein the forced closure system (103) comprises at least one elastomer attached to the stationary portion (100) at one end and to the movable flap (101) at the other end.

9. Rainwater pipe (203) according to one of claims 1 to 8, wherein the forced closure system comprises at least one counterweight attached to the movable flap (101).

10. Rainwater pipe (203) according to one of claims 1 to 3 or 7, wherein the forced closure system (103) comprises at least one pneumatic spring attached to the stationary portion at one end and to the movable flap at the other end and whose resistance to opening is set according to the height of water to be retained upstream.

11. Rainwater pipe (203) according to one of claims 1 to 10, which comprises a storage pipe (203), whose surface area of the cross-section is greater than one half square meter.

12. Rainwater pipe according to one of claims 1 to 11, which comprises a storage pipe (203), with the surface area of the cross-section of the storage pipe being at least equal to four times the surface area of the movable flap (101).

13. Rainwater network comprising at least one rainwater pipe (203) according to one of claims 1 to 12.
